# EUROPEAN PATENT SPECIFICATION

(11) **EP 1 484 852 B1**
(45) Date of publication and mention of the grant of the patent: **27.09.2006**
(21) Application number: 04253116.0
(22) Date of filing: 27.05.2004
(51) Int. Cl.: H04B 10/10

(54) **Free-space optical communication system**
Optisches Freiraum-Kommunikationssystem
Systeme de communication optique en espace libre

(30) Priority: 04.06.2003 RU 2003116577
(43) Date of publication of application: 08.12.2004
(73) Proprietor: Meklyn Enterprises Limited, Larnaca (CY)
(72) Inventor: Sidorovich, Vladimir, Moscow 121165 (RU); Ragulsky, Valery, Academik Kapitsa 117647 (RU)
(74) Representative: Hill, Justin John

(56) References cited:
- EP-A- 1 162 770
- US-A- 5 777 768
- US-A1- 2002 109 884
- US-A1- 2003 215 176

## Description

### Technical field

The present subject matter relates to free-space optical (FSO) communication systems and may be used for two-way information exchange between remote objects without using electrical wires and/or optical fibers, including the case of multiple objects taking part in an information exchange.

### Background

Free-space optical communication systems usually consist of two terminals comprising at least one light source and a receiver, coupled with transmit telescope(s) and a receive telescope, respectively.

FSO communication systems are known wherein the terminals comprise a light source and an optical receiver connected to corresponding transmit and receive telescopes by optical fibers (this is so-called fiber-based FSO systems). One of advantages of fiber-based FSO systems is that the use of optical fibers allows, if necessary, to place the optical system apart from signal source(s) and a receiver (US Patent Nº 4,960,315).

Such fiber-based FSO designs provide flexibility in positioning signal source(s) and a receiver relative to optical antennas (transmit and receive telescopes). This makes them less sensitive to thermal and mechanical perturbations and more compact (see USP 4,960,315). A disadvantage of the device proposed in USP 4,960,315 is that a separate telescope is necessary for every light source and for optical receiver.

The concept of light source or optical receiver connection to optical antennas by optical fibers has been used also in the US Patent Nº 6,366,723. The device has the same disadvantages as the one described in the 4,960,315 patent.

Several independent light sources are used in some FSO systems for redundancy. In other cases multiple light sources operating at different wavelengths are used for implementation of wavelength division multiplexing (WDM). Technical solutions proposed in the two patents cited above, require multiple transmit telescopes in such cases, in the amount corresponding to the number of light sources used (US Patent Nº 6,411,414). This makes the optical system bulky, expensive and difficult to align.

A possible solution to this problem by coupling multiple transmit fibers into single telescope was discussed in the 6,411,414 patent and US Patent 5,062,150. This solution is further developed in the US Patent Nº 5,060,304 and US Patent Nº 6,542,675. In the 5,060,304 system, a plurality of fused fibers are coupled into one transmit telescope for redundancy. In the 6,542,675 system, a plurality of fused single-mode fibers carrying different frequencies are coupled into one telescope to implement wave division multiplexing (WDM).

The approach based on coupling multiple fibers into one transmit telescope generally causes optical power losses and occasional dropping of some of the transmit channels, as images of the fibers light emitting facets built by the telescope objective lens at the location of a remote receive terminal, do not overlap on the receive aperture, so that some of them may be missed by the aperture

To decrease the losses, in 5,060,304 and 6,542,675, the fibers were proposed to be coupled into the telescope through a tapered fiber bundle. The fiber bundle consists of fibers with reduced the fiber core-to-core spacing. This puts images of the fibers' output cross-sections built by the telescope lens closer to each other, making it easier to capture the images of such cross-sections with the receive aperture of a remote receive terminal.

However, this solution does not totally eliminate losses and possibility of dropping of some of the channels associated with lateral misalignment of the fiber cross-sections in the receive aperture plane. Therefore it was proposed in USP 6,542,675 to mix WDM channels by a star coupler at the input of any fiber in the bundle, to the effect that any such fiber carries all of the channels. This method compensates for occasionally missing illuminated "spots" (fiber cross-sections images) by the receive aperture and eliminates any dropping of channels at the receive terminal caused by such missing.

A drawback of this method was that a star coupler made the system more expensive and complicated. Also, this method generally can not solve a problem of connecting receive fibers to the same telescope along with the transmit ones. In USP 5,060,304, a separate telescope coupled with a multitude of receive fibers was used.

A possible solution for coupling receive and transmit FSO channels with the same telescope is to provide optical coupling of a proximal end of a fiber both with the transmitter(s) and the receiver(s) of optical signals. A distal end of this fiber is thereby optically coupled with the optical antenna providing transmission and reception of optical signals via the free space. However, to implement this concept, it is necessary to provide division of receive and transmit channels at the proximal fiber end, using discrimination of receive and transmit signals by their carrier frequencies or polarization.

In fiberoptic communications, devices are known using the same optical fiber both for reception and for transmission of optical signals. An example of implementation of this approach is a transmit/receive fiberoptic communication device comprising a radiation source and a photodetector provided with a common lens system and with means for separation of receive and transmit optical beams having different carrier frequencies.

The channel discrimination means is implemented as two optical filters separated by a lens system providing optical coupling of the light source and photodetector with the end of a single optical fiber (see JP PN 10-010354). Such a device is expensive in manufacturing because of the need for wavelength division optical components and auxiliary optics at the fiber end that optically connects to the light sources and photodetectors.

This approach is used in FSO communication systems known from Russian Federation Certificates for Useful Model Nº 27285 and Nº 28576. Those systems can use a single optical antenna, matched with a single optical fiber used for reception as well as for transmission of optical signals. However, the systems are expensive in implementation because wavelength-division beamsplitters and auxiliary optical elements must be used at the fiber end that is optically connected with the light sources and photodetectors. The complexity of such systems increases very significantly when several transmit and/or receive channels have to be connected to the same telescope.

In the fiber-based FSO system proposed in USP 5,062,150, coupling of several light sources and a receiver with the same telescope has been implemented in several stages:
- Each of N light sources is coupled into one of N auxiliary fibers.
- The auxiliary fibers are coupled into one transmit fiber by using an N:1 fiber switch (where N is the number of the light sources). Alternatively, several auxiliary fibers could be directly coupled into the telescope by nesting the cores of such fibers close together within one fiber coupler coupled with the telescope.
- A receive fiber is coupled with a receiver.
- The transmit and receive fibers are coupled with the same telescope through a polarization sensitive beam-splitter (diplexer).

The approach proposed in the 5,062,150 patent is based on discrimination of transmit and receive channels by polarizations and requires use of polarization preserving fibers, quarter wave optical plates and some other auxiliary optical elements, which makes an FSO system more expensive and difficult to align.

US-A-5 777 768 describes a system and method for establishing a laser link communications system in free space including first and second terminals which are distanced from each other on an optical path. Each terminal includes a plurality of laser transmitters which together generate a plurality of laser beams. Each terminal directs its independently generated laser beams along substantially parallel paths. Although these paths are substantially parallel, the transmitted beams generally overlap in the far field, at the other terminal, where they are collected and incoherently summed for reception and analysis of the communication signal.

EP-A-1 162 770 describes a free space optical communication using multi-beam communications, for example between a base station and multiple remote stations. To improve efficiency and reduce complexity, the base station transmitter utilises a single wide-angle objective lens for all of the optical beams radiation sources.

A further US patent application having Publication No. US 2002/0109884 describes an electronically agile multi-beam optical transceiver having a first crossbar switch that switches input signals to selected ones of a special array of light emitters. The light emitters supply modulated light beams to spatial locations of a telecentric lens, which geometrically transforms the beams along different divergence paths, in accordance with displacements from the lens access of the light emitter elements within the spatial array.

### Summary

Goals of the disclosed free-space optical communication system include simplification of design, minimization of cost, and increasing of the number of light sources and photodetectors transmitting and receiving the optical signals through a shared optical antenna.

To obtain the said result, the free-space optical communication system comprises two transmit/receive terminals, where at least one of them comprises at least one photodetector and two light sources optically coupled with a common transmit/receive optical antenna. The first terminal optical antenna is implemented so that it forms point spread functions of points located at the first terminal light sources output apertures so that they overlap in the area where the second terminal transmit/receive antenna aperture is located. The point spread functions, formed by the antenna, corresponding to points located within the second terminal antenna aperture, overlap with receive apertures of the first terminal photodetectors.

According to another aspect of the invention there is provided a free-space optical communication according to claim 26.

To obtain the said result, the first terminal antenna is implemented as a focusing lens, while the apertures of the first terminal sources and photodetectors are displaced along the optical axes of sources and, correspondingly, photodetectors, from the area optically conjugated with the second terminal antenna aperture relative to the first terminal antenna lens by distances providing overlapping of bloomed images of the light sources and photodetectors in the second terminal antenna aperture plane.

To obtain the said result, the first terminal antenna is implemented as a focusing lens and a transparent plate with non-uniform optical thickness, placed between the lens and the area where the apertures of light sources and photodetectors are disposed.

To obtain the said result, the plate with non-uniform optical thickness is placed in the area optically conjugated with the second terminal antenna aperture relative to the first terminal antenna lens.

To obtain the said result, the apertures of the first terminal light sources are disposed at distances Lₙ from the above plate, as measured along the light propagation direction and determined from relationships NAₙ.Lₙ = Dₙ>d, where: NAₙ is the numerical aperture of the n-th source; Dₙ is the diameter of output light beam from the n-th source, as measured at the plate; d is the maximum distance between the apertures of sources, as measured in the direction normal to the light propagation direction.

To obtain the said result, the apertures of the first terminal photodetectors are disposed at a distance H from the above plate, as measured along the light propagation direction and determined from the relationship (2NA_{T}+G)·H = D>g, where: NA_{T} is the numerical aperture of the first terminal antenna lens; G is the angular width of the plate light scattering pattern; D is the diameter of light beam passed through the antenna lens and plate, as measured in the area where the apertures of photodetectors and light sources are located; g is the transverse dimension of this area.

To obtain the said result, the condition NAₙ+G/2 < NA_{T} is met for any n.

To obtain the said result, the G value for any n meets the condition G+qₙ/F > 2NA_{T}·Lₙ/F, where: F is the antenna lens focal length; qₙ is the aperture cross-section dimension of the n-th light source.

To obtain the said result, the first terminal antenna is implemented as a focusing lens and a piece of optical fiber placed between the antenna lens and the apertures of light sources and photodetectors, with the light-conducting core of the fiber diameter equal or exceeding the transverse dimension of area through which the axes of the light beams output from the sources and of the photodetectors' fields of view of the first terminal are passing, as measured in the plane of the optical fiber end optically coupled with the sources and photodetectors apertures, while the angular deflections of the above axes from the optical fiber axis at its end optically coupled with the sources and photodetectors apertures do not exceed the numerical aperture of this fiber piece.

To obtain the said result, the optical fiber piece is implemented with a length S meeting the condition S > Qn₁/NA, where: Q is the optical fiber piece core diameter; n₁ is the fiber material index of refraction; NA is the numerical aperture of this optical fiber piece.

To obtain the said result, the optical fiber piece end optically connected with the first terminal antenna lens is disposed in the area optically conjugated with the second terminal antenna aperture relative to the first terminal antenna lens.

To obtain the said result, the optical fiber piece end optically coupled with the antenna lens is implemented with an antireflection coating.

To obtain the said result, the optical fiber piece end optically coupled with the antenna lens is implemented with a thickening.

To obtain the said result, the thickening is implemented as a transparent plate with one of its flat surfaces attached to the fiber end via an immersion layer, while the light-accepting diameter T of the plate is more than 2NA · h/n₂; here NA is the optical fiber piece numerical aperture, h is the plate thickness, and n₂ is the plate material index of refraction.

To obtain the said result, the output aperture of at least one light source is implemented as an optical fiber end, while its other end is optically coupled with the source of optical radiation carrying the transmitted information.

To obtain the said result, the receive aperture of at least one photodetector is implemented as an optical fiber end, while its other end is optically coupled with a device converting the optical carrier radiation into electrical signals.

To obtain the said result, the apertures of light sources and photodetectors are implemented as optical fiber ends, while their other ends are optically coupled, correspondingly, with sources of optical radiation carrying the transmitted information, and with devices converting the information-carrying optical radiation into electrical signals.

To obtain the said result, the antenna is implemented as a focusing lens and an optical fiber piece with diameter of the light-conducting core equal to 3p, and the light source output aperture and photodetector receive aperture are attached to the piece of optical fiber end optically coupled with them, while the light source aperture is implemented as an optical fiber end having a cross-section dimension of p with the other end of the fiber optically coupled with the source of information-carrying optical radiation, and the photodetector aperture implemented as ends of six optical fibers, each of them having a cross-section dimension of p, with their other ends optically coupled with a device converting the information-carrying optical radiation into electrical signals.

To obtain the said result, the antenna is implemented as a focusing lens and an optical fiber piece with diameter of the light-conducting core equal to 3p, with the apertures of two light sources and of a photodetector attached to the piece of optical fiber end optically coupled with them, while the apertures of light sources are implemented as ends of two optical fibers having cross-section dimensions of p, with the other ends of fibers optically coupled with the information-carrying optical radiation sources, and the photodetector aperture implemented as ends of five optical fibers having cross-section dimensions of p, with their other ends optically coupled with a device converting the information-carrying optical radiation into electrical signals.

To obtain the said result, the first terminal antenna lens is implemented as refraction-type focusing lens, consisting of one or more optical components transparent to optical radiation transmitted and received through the antenna.

To obtain the said result, the first terminal antenna lens is implemented as reflection-type focusing lens, consisting of one or more concave and/or convex mirrors reflecting optical radiation transmitted and received through the antenna.

To obtain the said result, the first terminal antenna lens is implemented as a combination of one or more refraction-type optical components transparent to the radiation transmitted and received through the antenna, and of one or more concave and/or convex mirrors reflecting optical radiation transmitted and received through the antenna.

To obtain the said result the first terminal optical antenna is implemented with means providing its transparency only within spectrum parts occupied by frequency spectra of optical radiation transmitted and received though it; whereas the photodetectors are provided with means for selection of channels by filtering out optical radiation having optical spectra different from intended for a particular photodetector.

To obtain the said result, the means providing the antenna transparency only within spectrum parts occupied by frequency spectra of optical radiation transmitted and received through it is implemented as one or several optical filters installed between the antenna and second terminal, inside antenna, between the antenna and the apertures of light sources and photodetectors.

To obtain the said result, the means providing the antenna transparency only within spectrum parts occupied by frequency spectra of optical radiation transmitted and received through it is implemented as a reflection coating deposited onto one or several optical components of the antenna with reflectivity only within spectrum parts occupied by frequency spectra of optical radiation transmitted and received through the antenna.

Additional objects, advantages and novel features of the examples will be set forth in part in the description which follows, and in part will become apparent to those skilled in the art upon examination of the following and the accompanying drawings or may be learned by production or operation of the examples. The objects and advantages of the present subject matter may be realized and attained by means of the methodologies, instrumentalities and combinations particularly pointed out in the appended claims.

### Brief Description of the Drawings

The drawing figures depict one or more implementations in accord with the present concepts, by way of example only, not by way of limitations. In the figures, like reference numerals refer to the same or similar elements.
Figure 1 shows an implementation version of a terminal preceding the invention;
Figure 2 illustrates an implementation version of a free-space optical communication system terminal where the radiation sources and photodetectors are installed;
Figure 3 depicts an implementation version of a free-space optical communication system antenna with a plate having non-uniform optical thickness;
Figure 4 shows the ray path from a point of the system second terminal antenna to the plate with non-uniform optical thickness which is part of the first terminal antenna;
Figure 5 illustrates an implementation version of a terminal antenna using an optical fiber piece to match the apertures of radiation sources and photodetectors with the second terminal antenna aperture; and
Figure 6 depicts implementation versions schematically of an antenna and optical fibers coupling it with the sources of information-carrying optical radiation, and with the devices converting the information-carrying optical radiation into electrical signals.

### Detailed Description

When several light sources and/or photodetectors placed near each other are optically connected to the same transmit/receive optical antenna, for example by separate optical fibers, the apertures of the above sources and/or photodetectors are laterally displaced relative to each other. As applied to the sources, this causes angular mismatch of directivity patterns of the corresponding light beams coming out from the antenna. In the second terminal plane, every such beam has its own irradiated area, and in a general case these areas are not overlapping.

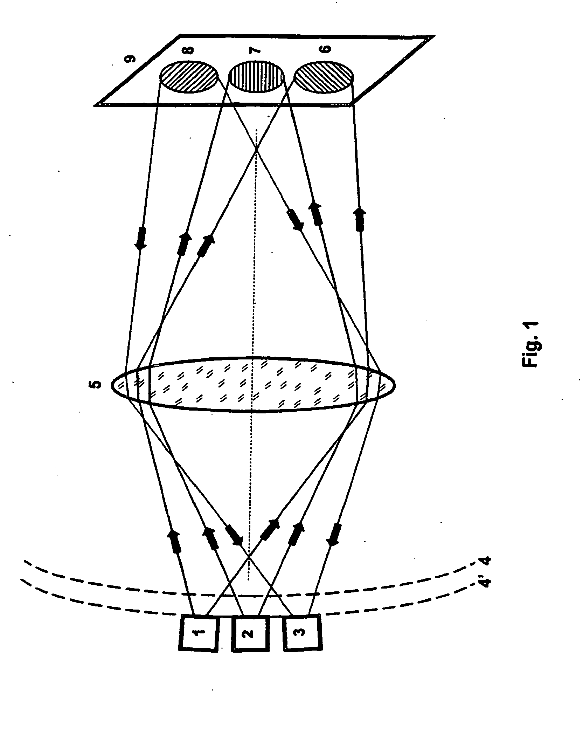

Let us consider a case where the radiation sources are disposed in an area optically conjugated with the second terminal relative to the first terminal antenna. In Figure 1, the following is shown: 1 and 2 are output apertures of the first terminal radiation sources; 4' is a surface optically conjugated with the plane 9 in which the second terminal aperture lies, relative to the lens 5 of the first terminal antenna; 4 is the focal surface of the antenna lens; and 6 and 7 are images of source apertures in the plane 9. The photodetector 3 field of view is marked in Figure 1 as 8.

The sources and photodetectors may be appropriate electronic components position as shown. Alternatively, the sources and photodetectors may be the distal ends of respective optical fibers, wherein the fibers transmit light to and from electronic components coupled to proximal ends of the fibers.

The irradiated areas corresponding to the images of the source apertures do not overlap in the plane 9. This means that for the second terminal to receive the radiation from all sources of the first terminal, the second terminal should be provided with multiple receive antennas each of them placed within one of the irradiated areas (in the case considered, the areas 6 or 7), or with a single antenna having a very large aperture covering both areas 6 and 7 which may be difficult to implement.

To transversely displaced apertures of photodetectors (in Figure 1, for example, one such aperture 3 is shown) displaced relative to each other, angular fields of view are corresponding, which, moreover, do not match with the angular patterns of the first terminal antenna output light beams. The photodetector 3 field of view is marked in Figure 1 as 8.

It means that the second terminal must have either multiple transmit antennas, each of them matched by angular position with the angular field of view of a photodetector, or a large single transmit antenna. Besides this, the second terminal transmit antennas should not be combined with receive antennas (as area 8 in Figure 1 does not overlap with 6 and 7), thus imposing additional complications in the second transmit/receive terminal design.

The solution proposed in this patent application provides elimination of the above difficulties. The essence of this solution is implementation of the first terminal with an antenna forming point spread functions of points on the output apertures of radiation sources which overlap in the area where the second terminal transmit/receive antenna aperture is disposed, and forming point spread functions of points within the second terminal antenna aperture to provide their overlapping with the first terminal photodetector apertures.

Each point on the output aperture of any radiation source of the first terminal is thereby optically coupled with the single transmit/receive antenna of the second terminal, and each point of the second terminal antenna aperture is optically coupled with the aperture of each photodetector of the first terminal.

This result may be achieved by displacing the apertures of the sources and photodetectors of the first terminal along the respective optical axes of the sources and the photodetectors, from the area optically conjugated with the second terminal antenna aperture relative to the first terminal antenna lens, by distances providing blooming of images of source and photodetector apertures in the second terminal antenna aperture plane to their overlapping in this plane.

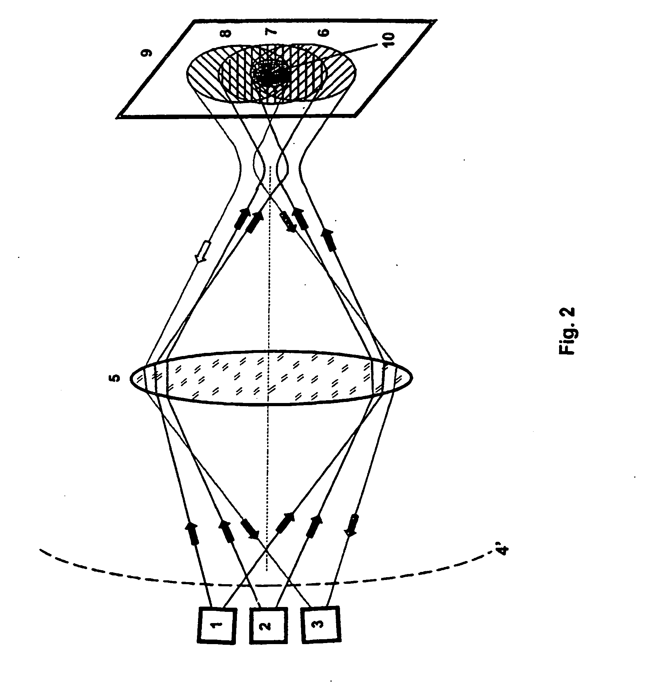

This case is illustrated in Figure 2. Bloomed images 6 and 7 of source apertures 1 and 2 are superimposed one over another on the aperture 10 of the second terminal antenna, and thus the optical radiation from each source comes, at least partly, into the second terminal antenna aperture. Besides this, the bloomed image 8 of the photodetector aperture is overlapping with 6 and 7, and thus the radiation from the aperture 10, placed in the area of overlap of 6, 7, and 8, comes to the aperture 3 of the first terminal photodetector.

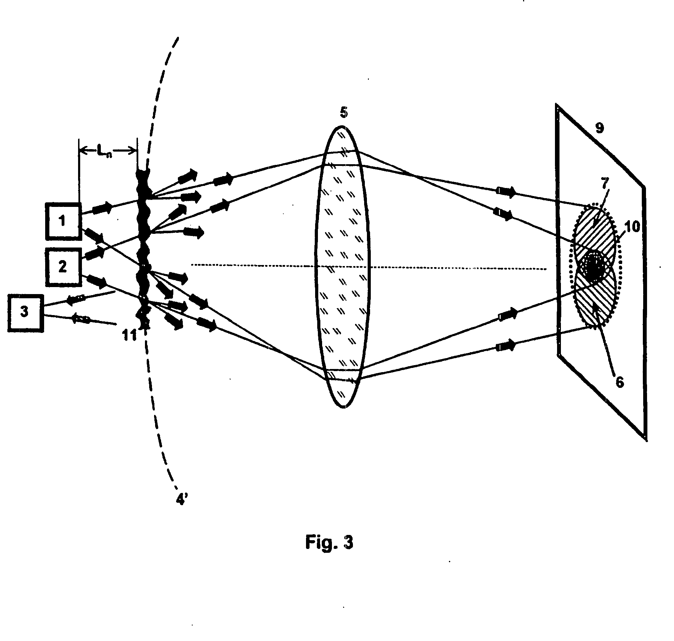

The shaping of a required point spread function formed by the first terminal antenna is obtained also by placing the transparent plate 11 with non-uniform optical thickness between the antenna lens and the apertures of the sources and photodetectors (see Figure 3).

The above mentioned plate serves as an extended light source having transverse dimensions equal to the cross-section diameter of the light cone coming from each source aperture at the plate surface. As shown by V.V. Ragulsky and V.G. Sidorovich (AAH, 2002, v.384, Nº1, p.31), the extended light source can provide partial compensation of optical aberrations in the light propagation path from the first terminal antenna to the second terminal antenna.

Placing of a plate with non-uniform optical thickness in the area optically conjugated with the second terminal relative to the antenna lens provides optimum concentration of radiation in the remote terminal plane 9 and partial compensation of the effect of aberrations in the propagation path on the light distribution in this plane, as thereby an image is built in this plane of the plate 11 part irradiated by radiation coming from the apertures of the sources.

If the plate has thereby a sufficient angular width G of the light scattering pattern to meet the condition G+qₙ/F > 2NA_{T}·Lₙ/F, where: F is the antenna lens focal length; NA_{T} is the first terminal antenna numerical aperture; qₙ is the transverse dimension of the n-th radiation source aperture; and Lₙ is the distance from the n-th source aperture to the plate, then the spherical component of the wavefront of radiation passed through the plate, caused by displacement of source apertures relative to the plate, does not impair the compensation of optical aberrations in the light propagation path from the first terminal antenna.

Placing the radiation source apertures at distances Lₙ from the above plate, with Lₙ found from relationships NAₙ·Lₙ = D>d, where: NAₙ is the n-th radiation source numerical aperture; Dₙ is the source output beam diameter at the plate; d is the maximum distance between the apertures of sources in the direction transverse to the light propagation direction, provides overlapping of images of plate areas irradiated by the sources. In this case, the aperture 10 of the second terminal antenna, disposed in the area of images overlapping of the plate irradiated areas, will be optically coupled to all sources without any exclusion.

Placing the photodetector apertures at a distance H from the above mentioned plate, with H found from the relationship (2NA_{T}+G)·H = D>g, where: D is the diameter of light beam passed through the antenna lens and the plate, in the area where the apertures of sources and photodetectors are disposed; g is the transverse dimension of this area, provides optical coupling of the photodetectors with the aperture 10 of the second terminal antenna disposed in the area of images overlapping of the plate 11 parts irradiated by the sources.

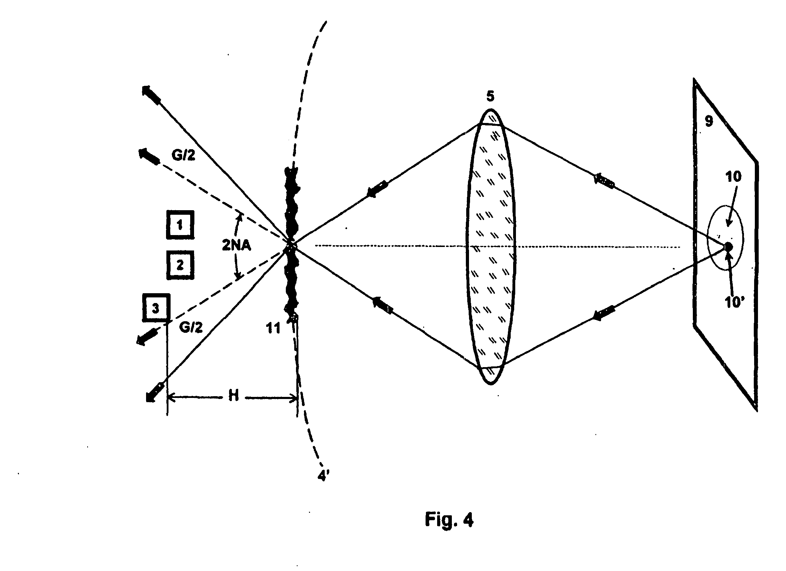

In Figure 4, for example, one of points (point 10') is shown from where the second terminal transmit radiation goes out, which is intercepted by the lens 5 of the first terminal antenna. The radiation is focused at the surface 4' optically conjugated with the second terminal plane 9 relative to the lens 5. After focusing, the radiation propagates with a beamwidth defined by combination of the spherical component equal to 2NA_{T}, and the component G caused by the optically nonuniform plate 11. If the total angular width 2NA_{T}+G, multiplied by the distance H from the plate to the receive photodetector apertures, does exceed the transverse dimensions of the area where the photodetectors and sources apertures are disposed, then the photodetectors will be optically coupled to the aperture 10.

If the condition NAₙ+G/2 < NA_{T} is met for any n, then the output radiation of sources, after passing through the plate 11, will be within the lens 5 numerical aperture, thus reducing the radiation loss when it passes through this lens.

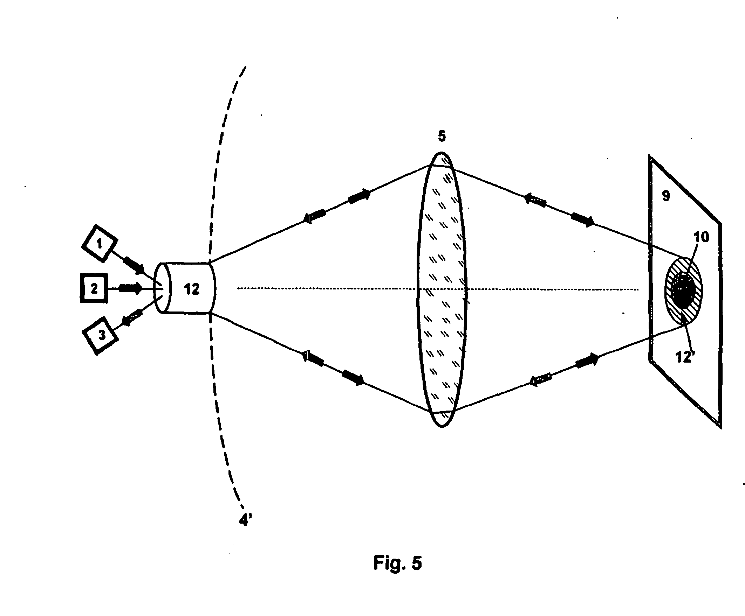

Implementation of the first terminal antenna as a focusing lens 5 and an optical fiber piece 12 placed between the lens 5 and the apertures of sources and photodetectors 1, 2, and 3 (see Figure 5) provides the following:
1. the optical fiber piece 12 is mixing the output beams from the radiation source apertures so that output radiation from any source is present in any point of the optical fiber end coupled with the antenna lens;
2. the optical fiber piece is mixing the light beams coming from the area where an image of the fiber end built by the antenna lens is located, so that radiation from any point of this area is present in any point of the fiber end coupled with the apertures of photodetectors.

The optical fiber piece length S should thereby meet the condition S > Qn₁/NA, where: Q is the fiber core diameter; NA is its numerical aperture; and n₁ is the fiber material index of refraction.

Thus, the total area where the image of the fiber end is built by the antenna lens and where the second terminal antenna aperture is disposed, is optically coupled with any radiation source and any photodetector.

To minimize the radiation loss in the path from the apertures of radiation sources to the optical fiber piece and from the fiber piece to the apertures of photodetectors, the optical fiber light-conducting core transverse dimension is selected to be more or equal to the transverse dimension of the area through which the axes are passing of the first terminal radiation source directivity patterns and of the photodetector fields of view in the plane of the optical fiber piece optically coupled with the apertures of radiation sources and photodetectors.

Besides this, to provide "capture" and to minimize the loss of radiation by its transmission through the optical fiber piece, the angular deflections of radiation source directivity pattern axes and photodetector field of view axes from the optical fiber piece axis at the fiber end optically coupled with the apertures of sources and photodetectors should not exceed the numerical aperture of this optical fiber piece.

Placing the optical fiber piece end in the area optically conjugated with the second terminal antenna aperture relative to the first terminal antenna lens provides optical coupling, with minimum loss, between all radiation sources and photodetectors and the area where the optical fiber piece end image is built in the second terminal plane.
Besides this, in this case optimum compensation of aberrations in the propagation path is achieved due to extension of the light source, which in this case is the optical fiber piece end optically coupled with the antenna lens.

Implementing of the optical fiber piece end coupled with the antenna lens with an antireflection coating makes it possible to reduce the transmitted radiation reflection from this end into the apertures of photodetectors. Implementation of this end with a thickening brings the result that not all the light reflected from the fiber end returns into the thinner part of the optical fiber and then passes to the photodetectors.

This is quite topical, as the transmit radiation power is generally several orders of magnitude higher than the radiation power received from the remote second terminal, and thus even weak return glints of transmit radiation may infringe the reception of high-quality optical signals coming from the remote terminal. Of course, the positive effect will be increased if thickening and antireflection coating will be simultaneously used.

Implementing of the thickening as a transparent plate with flat surfaces, attached to the optical fiber end via an immersion layer, where the light-accepting diameter T of the plate is more than 2NA · h/n₂ (where NA is the optical fiber piece numerical aperture, h is the plate thickness, and n₂ is the plate material index of refraction) provides absence of return glints at the joint of optical fiber cross-section and the thickening (due to the immersion), as well as absence of transmit radiation loss caused by aperture limiting by the side surfaces of the plate (due to the fact that its light-accepting diameter exceeds the transverse dimension of the divergent radiation beam).

Implementing of the output aperture of at least one radiation source as an optical fiber end, while its other end is optically coupled with the source of optical radiation carrying the transmitted information, allows to provide a high density of radiation source disposition near the antenna lens focal surface, as well as to simplify the access to the radiation source in case it requires replacement or adjustment.

Implementing of the receive aperture of at least one photodetector as an optical fiber end, while the other end of the fiber is optically coupled with a device converting the information-carrying optical radiation into electrical signals, allows to provide a high-density disposition of photodetectors near the antenna focal surface, as well as to simplify the access to the device converting the optical radiation into electrical signals in case it requires replacement or adjustment.

Implementing of the antenna as a lens and an optical fiber piece, with the apertures of radiation sources and photodetectors implemented as optical fiber ends while the other ends of fibers are optically coupled, correspondingly, with the sources of optical radiation carrying the transmitted information and with the devices converting the optical carrier radiation into electrical signals, allows to provide high efficiency of optical coupling of the optical fiber piece to apertures of multiple sources and multiple photodetectors without using of complicated and expensive optical lens systems.

Implementing of the antenna as a lens and an optical fiber piece, with the light-conducting core cross-section diameter equal to 3p, and attaching to that core the output aperture of radiation source and the receive aperture of the photodetector, allows to provide maximum compactness of the device. Thereby, to minimize the loss of radiation by its transmission and reception, the radiation source aperture is implemented as an optical fiber end having a cross-section dimension of p, with the other end of the fiber optically coupled with the source of information-carrying optical radiation, and the photodetector aperture is implemented as ends of six optical fibers, each of them having cross-section dimensions of p, with their other ends optically coupled with a device converting the information-carrying optical radiation into electrical signals.

With such a configuration, the loss of receive radiation is small, as the total cross-section area of six optical fiber ends delivering the radiation from the antenna to the photodetector is around 2/3 of the optical fiber piece end cross-section area. The loss of receive radiation is thereby only 33% which is acceptable for practical applications.

If two radiation sources should be used, the antenna may be implemented as a lens and an optical fiber piece having the cross-section dimension of the light-conducting core equal to 3p, with the transmit apertures of two light sources and the receive aperture of a photodetector attached to it, while the apertures of light sources are implemented as optical fibers having cross-section dimensions of p, with the other ends of fibers optically coupled with the sources of information-carrying optical radiation, and the photodetector receive aperture is implemented as ends of five optical fibers each of them having a cross-section dimension of p, with their other ends optically coupled with a device converting the information-carrying radiation into electrical signals.

In this case, the receive radiation loss is about 45% which is also acceptable for applications. At the same time, this simple and inexpensive design provides optical coupling of two separate light sources and a photodetector with a single transmit/receive antenna without additional lenses and other optical components, while if the proposed solution is not used, the optical system needed for matching of more then one light source with the antenna will be far more complicated.

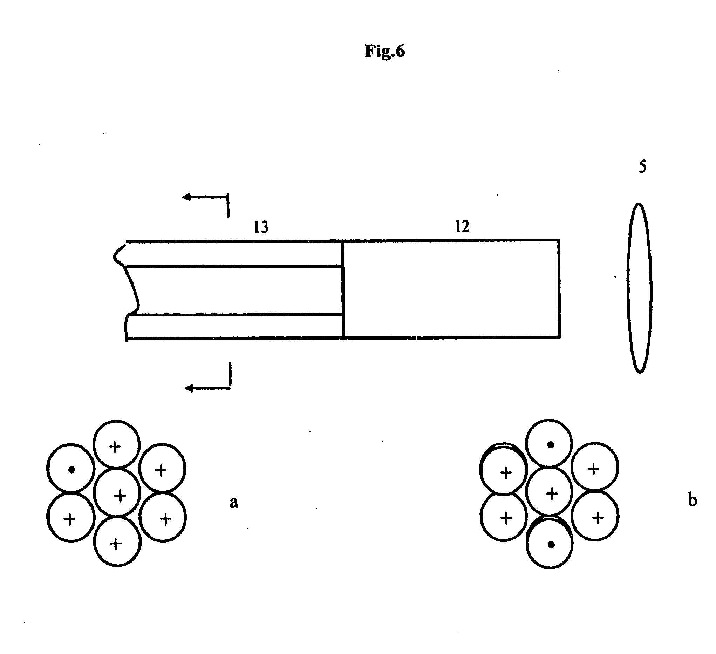

In Figure 6, implementation versions are shown of the antenna and optical fibers coupling it with the photodetectors and radiation sources (in the cross-sections of optical fiber beams, the point indicates the direction of light from the sources, while the sign + indicates the direction to the photodetectors). The antenna consists thereby of a lens 5 and an optical fiber piece 12 to which a bundle of optical fibers 13 is attached consisting of optical fibers delivering the radiation from the sources to the antenna (in the example shown in the left part, there is one such optical fiber, while in the example shown in the right part are two such optical fibers), and of optical fibers delivering the radiation from the antenna to the photodetectors (in the example shown in the left part, there are six such optical fibers, while in the example shown in the right part are five such optical fibers). Positions of photodetectors and radiation sources at a in Figure 6 and also at b in Figure 6 may be swapped if necessary, so that any photodetector may be replaced with a radiation source and the source installed where the photodetector was initially positioned.

It should be noted that the first terminal radiation sources might operate at equal wavelengths as well as at different ones. In the first case, a single photodetector may be used in the second terminal. If different wavelengths are used in various sources of the first terminal, it is expedient to equip the second terminal with multiple photodetectors, with every one of them sensitive to one wavelength only. This makes it possible to implement a free-space optical communication system with wavelength division multiplexing (WDM) of channels. The solutions proposed in this patent application allow to provide optical coupling of multiple radiation sources and/or multiple photodetectors to a single transit/receive antenna.

The first terminal antenna focusing lens may be implemented as one or more refraction-type or reflection-type optical elements or as a combination thereof. For "small-aperture" lenses (less than about 50 mm) it may be preferable to make them of refraction type optical components transparent to optical radiation transmitted and received through such lens. For larger scale lenses it may be recommended using a concave main reflector, convex secondary reflector and one or more refraction-type elements matching the lens' and photodetectors' and light sources' numerical apertures.

Implementation of the first terminal antenna lens with means providing its transparency only within spectrum parts occupied by frequency spectra of transmit and receive radiation provides filtering out background radiation such as sunlight and protection of the system components installed behind the lens from damaging by the sunlight. Additional decrease of the background radiation and also of WDM channels cross-talk is achieved by providing the photodetectors with filters blocking optical radiation with optical spectra different from intended for a particular photodetector.

In particular cases, the above means providing transparency only within spectrum parts occupied by frequency spectra of transmit and receive radiation may be implemented as one or several optical filters installed before or behind the antenna lens, or even inside it, if the lens is implemented as several refraction- and/or refraction-type optical components placed in succession along the optical ray path. The expediency of placing the filter (filters) here or there will be determined by the antenna design features. For example, if a refractor-type lens will be used in the antenna, it will be most expedient to install the filter before the lens. If the filter is installed behind the focusing lens, the focused solar radiation may have a power density high enough to damage the filter.

In some other particular cases, the above means may be implemented as a corresponding coating which may be deposited onto one or several optical components of the focusing lens. One specifically efficient implementation of such means is concave and/or convex mirrors with multi-layer interference coating having reflectivity limited to frequency spectra of the transmit and receive radiation.

If the receive and transmit radiation frequency spectra are close to each other, it may be a single transparency region common for both of them. This is how Sunflower Technologies, where the authors of this application are both working, implemented the transmit/receive reflection-type focusing lens for the system using two wavelengths, 785 nm and 830 nm, for transmission and receiving of optical signals. However, if the spectra are far enough from each other, only beams corresponding to different spectrum parts (transmit and receive, separately) of the total natural illumination spectrum shall be passed through the antenna.

The free-space optical communication system comprises at least two transmit/receive terminals, each of them comprising one or more radiation sources (designated in the drawings as 1 and/or 2), the apertures of which may be implemented either as radiating areas of photodetectors or as faces of active elements of lasers (semiconductor, gaseous, etc.), or as end faces of optical fibers, while their other ends are optically coupled with radiating areas of light-emitting diodes or active elements of lasers, or to output apertures of other optical devices creating light waves modulated by information signals. The terminal comprises also one or more photodetectors 3 which may be selected from known ones. In particular cases, their apertures may be input apertures of devices providing transportation of received optical radiation to converters of this radiation into electrical signals.

The indicated apertures of radiation sources and photodetectors are disposed with a displacement along their optical axes relative to the surface 4' optically conjugated with the plane 9 of the second terminal antenna aperture 10 relative to the lens 5 of the first terminal antenna. The indicated apertures of radiation sources and photodetectors are projected by the first terminal antenna lens as areas 6, 7, and 8 of the plane 9 wherein the second terminal antenna aperture is disposed.

As the lens 5, a single- or multiple-component lens or any other optical focusing system may be used (e.g. a reflector-type or refractor-type telescope).

The bloomed images 6, 7, and 8 of the indicated apertures are partly overlapping each other, and within the overlapping area the second terminal antenna aperture 10 is disposed (consisting of many points 10'); the second terminal may be similar in its design to the first terminal, or may have a different design (e.g. selected from known ones).

In particular implementation cases, to produce required point spread functions formed by the first terminal antenna, between the antenna lens 5 and the apertures 1, 2, and 3 of radiation sources and/or photodetectors a plate 11 may be installed having non-uniform optical thickness, e.g. a glass plate with a rough surface. An optimum solution seems to be installation of this plate in the area 4' conjugated with the second terminal antenna aperture 10 relative to the first terminal antenna lens.

In another particular case, instead of the plate 11 an optical fiber piece 12 may be used with its minimum length selected to provide mixing of the radiation entering it by reflection from its side surfaces. It should be noted that the fiber piece length might considerably exceed the minimum value if this is convenient for the terminal design. The optical fiber piece may have an arbitrary cross-section shape (circular, square, oval, etc.).

It is advisable to provide the optical fiber end face coupled with the first terminal antenna lens with antireflection coating implemented in any known way, as well as with a thickening, e.g. implemented as a transparent plate having flat surfaces which is attached to the above fiber end via an immersion layer (e.g. a layer of Canadian balsam or glycerin).

In a particular case, the apertures of photodetectors and radiation sources may be implemented as a bundle of optical fibers 13, with the number of optical fibers in the bundle selected in accordance with the goals set. The number as well as shapes and dimensions of fibers optically coupled with sources of information-carrying optical radiation and, correspondingly, with devices converting the information-carrying optical radiation into electrical signals may be various.

For example, as shown in Figure 6, the number of fibers is seven, all of them have circular cross-sections with a diameter three times less than the diameter of the optical fiber piece which is part of the antenna. The seven optical fibers fall into a circle having a three times larger diameter than the fiber diameters; this allows reducing the radiation loss at the joint between these fibers and the optical fiber piece. One of these fibers (see Figure 6, a) or two of them (see Figure 6, b) serve as a radiation source aperture, while the remaining fibers are optically coupled with a device (or devices) converting the optical radiation into electrical signals.

The system shown in Figure 2 operates in the following way. The information-signal modulated radiation from source apertures 1 and 2 passes through the lens 5 and, by virtue of their proper relative positions, is projected as spots 6 and 7 in the plane 9 of the second terminal antenna aperture 10. Thereafter, the radiation part falling into the aperture 10 is transported to the second terminal photodetector where it is converted into electrical signals. Correspondingly, the radiation from the second terminal is captured by the first terminal antenna lens 5 and transported to the aperture (apertures) 3 of a photodetector (photodetectors).

The device shown in Figure 3 operates in the following way. The information-signal modulated optical beams from source apertures 1 and 2 are passing through the plate 11 with non-uniform optical thickness; as a result, the beam wavefronts are distorted and their angular spectra are broadened. Thereafter, the beams are passing the lens 5 and are projected as partly overlapping spots 6 and 7 in the plane 9.

Due to plate 11, the light intensity distributions in the spots is more uniform than in the previous case shown in Figure 2, if the plate scattering pattern angular width is wide enough to compensate effects of spherical component of the radiation wavefront on averaging large-scale intensity distribution in the second terminal plane. In this case, the intensity non-uniformities caused by aberrations in the path from the first terminal antenna lens to the second terminal antenna aperture are averaged over the cross-section in the second terminal antenna aperture plane due to broadening of the radiation angular spectrum by the plate.

The ray path from the second terminal antenna to the first one is shown in Figure 4, where, for example, a point 10' is shown from where the second terminal transmit radiation goes out, which is captured by the first terminal antenna lens 5. This radiation is focused at the surface 4', which is optically conjugated with the plane 9 of the second terminal relative to the lens 5. After focusing, the radiation propagates with a divergence defined by combination of a spherical component equal to 2NA_{T}, and a component G caused by the non-uniform plate 11. If the total divergence 2NA_{T} + G multiplied by the distance H from the plate to the receive apertures of photodetectors exceeds the transverse dimensions of the area in which the apertures of photodetectors and radiation sources are disposed, then the photodetectors will be optically coupled with the aperture 10.

The operation of devices presented in Figures 5 and 6 is similar to the above one. Using of the optical fiber piece 12 instead of the plate 11 is preferable in some cases, since the light reflection from the optical fiber piece walls is in this case providing more complete overlapping of the point spread functions of points located at the output apertures of radiation sources, as well as of points located within the second terminal antenna aperture. On the other hand, to obtain a large area of such an overlapping it may be necessary to use an expensive large-diameter optical fiber, which, moreover, may be too rigid for compact installation of the antenna.

If, for example, the area 12' diameter should be 2 meters at a distance of 200 m from the first terminal antenna lens, and the focal length of this lens is 100 mm, then an optical fiber piece with a core diameter of 1 mm will be needed. In this case, using of the plate 11 and of radiation sources having numerical apertures of 0.22 and disposed at a distance of 2.5 mm from the plate will allow to obtain an irradiated area on the plate with a transverse dimension of 1 mm, which is the required result for the case.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present concepts.

## Claims

1. A free-space optical communication system comprising two transmit/receive terminals, wherein at least one of the terminals comprises at least one photodetector (3) and at least two light sources (1, 2) optically coupled with a common transmit/receive optical antenna, **characterised in that**:
the first terminal optical antenna is implemented as a focussing means adapted to form point spread functions of points located at output apertures of the first terminal light sources so as to provide overlap thereof in an area where the second terminal transmit/receive antenna aperture is located (9); and
point spread functions formed by the first terminal optical antenna corresponding to points located within the second terminal antenna aperture overlap with the receive apertures of the first terminal photodetectors.

2. The system as in claim 1, further **characterised in that** the first terminal optical antenna is implemented as a focusing lens (5), while the apertures of the first terminal sources and photodetectors are displaced along the optical axes of sources and, correspondingly, photodetectors, from the area optically conjugated with the second terminal antenna aperture relative to the first terminal antenna lens by distances providing overlapping of bloomed images of the light sources and photodetectors in the second terminal antenna aperture plane.

3. The system as in claim 1, further **characterised in that** the first terminal optical antenna comprises a focusing lens (5) and a transparent plate (11) with non-uniform optical thickness, placed between the lens and the area where the apertures of light sources and photodetectors are disposed.

4. The system as in claim 3, further **characterised in that** the transparent plate with non-uniform optical thickness is placed in the area optically conjugated with the second terminal antenna aperture relative to the first terminal antenna lens.

5. The system as in claim 4, further **characterised in that** the apertures of the first terminal light sources are disposed at distances Lₙ from the transparent plate, as measured along the light propagation direction and determined from relationships NAₙ.Lₙ = Dₙ>d,
where: NAₙ is the numerical aperture of the n-th source; and Dₙ is the diameter of output light beam from the n-th source, as measured at the transparent plate; d is the maximum distance between the apertures of sources, as measured in the direction normal to the light propagation direction.

6. The system as in claim 4, further **characterised in that** the apertures of the first terminal photodetectors are disposed at a distance H from the transparent plate, as measured along the light propagation direction and determined from the relationship (2NA_{T}+G).H = D>g, where: NA_{T} is the numerical aperture of the first terminal antenna lens; G is the angular width of the plate light scattering pattern; D is the diameter of light beam passed through the antenna lens and plate, as measured in the area where the apertures of photodetectors and light sources are located; g is the transverse dimension of this area.

7. The system as in claim 4, further **characterised in that** the condition NAₙ+G/2 < TA_{T} is met for any n.

8. The system as in claim 4, further **characterised in that** the G value for any n meets the condition G+qₙ/F > 2 NA_{T}. Lₙ /F, where: F is the antenna lens focal length; qₙ is the aperture cross-section dimension of the n-th light source.

9. The system as in claim 1, further **characterised in that** the first terminal antenna comprises a focusing lens and an optical fiber placed between the antenna lens and the apertures of light sources and photodetectors, with the light-conducting core of the fiber diameter equal or exceeding the transverse dimension of area through which the axes of the light beams output from the sources and of the photodetectors' fields of view of the first terminal are passing, as measured in the plane of the optical fiber end optically coupled with the sources and photodetectors apertures, while the angular deflections of the above axes from the optical fiber axis at its end optically coupled with the sources and photodetectors apertures do not exceed the numerical aperture of the optical fiber.

10. The system as in claim 9, further **characterised in that** the optical fiber is implemented with a length S meeting the condition S > Qn₁/NA, where: Q is the optical fiber core diameter; n₁ is the fiber material index of refraction; NA is the numerical aperture of this optical fiber.

11. The system as in claim 9, further **characterised in that** the optical fiber end optically coupled with the first terminal antenna lens is disposed in the area optically conjugated with the second terminal antenna aperture relative to the first terminal antenna lens.

12. The system as in claim 9, further **characterised in that** the optical fiber end optically coupled with the antenna lens is implemented with an antireflection coating.

13. The system as in claim 9, further **characterised in that** the optical fiber end optically coupled with the antenna lens is implemented with a thickening.

14. The system as in claim 13, further **characterised in that** the thickening is implemented as a transparent plate with one of its flat surfaces attached to the optical fiber end via an immersion layer, while the light-accepting diameter T of the transparent plate is more than 2NA.h/n₂; here NA is the optical fiber piece numerical aperture, h is the plate thickness, and n₂ is the plate material index of refraction.

15. The system as in claim 1, further **characterised in that** the output aperture of at least one light source is implemented as an optical fiber end, while the other end of the optical fiber is optically coupled with the source of optical radiation carrying the transmitted information.

16. The system as in claim 1, further **characterised in that** the receive aperture of at least one photodetector is implemented as an optical fiber end, while the other end of the optical fiber is optically coupled with a device converting the optical carrier radiation into electrical signals.

17. The system as in claim 1, further **characterised in that** the apertures of light sources and photodetectors are implemented as optical fiber ends, while the other ends of the optical fibers are optically coupled, correspondingly, with sources of optical radiation carrying the transmitted information, and with devices converting the information-carrying optical radiation into electrical signals.

18. The system as in claim 9, further **characterised in that** a light-conducting core of the optical fiber has diameter equal to 3p, and the light source output aperture and photodetector receive aperture are attached to the optical fiber end optically coupled with them, while the light source aperture is implemented as an optical fiber end having a cross-section dimension of p with the other end of the fiber optically coupled with the source of information-carrying optical radiation, and the photodetector aperture implemented as ends of six optical fibers, each of them having a cross-section dimension of p, with their other ends optically coupled with a device converting the information-carrying optical radiation into electrical signals.

19. The system as in claim 9, further **characterised in that** a light-conducting core of the optical fiber has diameter equal to 3p, with the apertures of two light sources and of a photodetector attached to the optical fiber end optically coupled with them, while the apertures of light sources are implemented as ends of two optical fibers having cross-section dimensions of p, with the other ends of fibers optically coupled with the information-carrying optical radiation sources, and the photodetector aperture implemented as ends of five optical fibers having cross-section dimensions of p, with their other ends optically coupled with a device converting the information-carrying optical radiation into electrical signals.

20. The system as in claim 1, further **characterised in that** the first terminal antenna lens is implemented as refraction-type focusing lens, comprising one or more optical components transparent to optical radiation transmitted and received through the antenna.

21. The system as in claim 1, further **characterised in that** the first terminal antenna lens is implemented as reflection-type focusing lens, comprising one or more concave and/or convex mirrors reflecting optical radiation transmitted and received through the antenna.

22. The system as in claim 1, further **characterised in that** the first terminal antenna lens comprising one or more refraction-type optical components transparent to the radiation transmitted and received through the antenna, and one or more concave and/or convex mirrors reflecting optical radiation transmitted and received through the antenna.

23. The system as in claim 1, further **characterised in that** the first terminal optical antenna is implemented with means providing its transparency only within spectrum parts occupied by frequency spectra of optical radiation transmitted and received though it, whereas the photodetectors are provided with means for selection of channels by filtering out optical radiation having optical spectra different from intended for a particular photodetector.

24. The system as in claim 23, further **characterised in that** the means providing the antenna transparency only within spectrum parts occupied by frequency spectra of optical radiation transmitted and received through it is implemented as one or several optical filters installed between the antenna and second terminal, inside antenna, between the antenna and the apertures of light sources and photodetectors.

25. The system as in claim 23, further **characterised in that** the means providing the antenna transparency only within spectrum parts occupied by frequency spectra of optical radiation transmitted and received through it is implemented as a reflection coating deposited onto one or several optical components of the antenna with reflectivity only within spectrum parts occupied by frequency spectra of optical radiation transmitted and received through the antenna.

26. A free-space optical communication terminal and antenna combination, the terminal of the combination comprising a plurality of light sources (1, 2) and a plurality of photodetectors (3), wherein the antenna is a transmit/receive optical antenna common to the terminal light sources and photodetectors for transmitting and receiving optical communications to and from a remote terminal, wherein the free-space optical communication terminal is **characterised in that**:
the optical antenna is implemented as a focussing means adapted to form point spread functions of points located at apertures of the light sources so that images of the apertures of the light sources overlap in a remote area which, in use, corresponds to a transmit/receive aperture of said remote terminal; and wherein
point spread functions formed by the optical antenna corresponding, in use, to points located within a transmit/receive aperture of the remote terminal, to overlap with receive apertures of the photodetectors.

## Patentansprüche

1. Optisches Freiraumkommunikationssystem, umfassend zwei Übertragungs/Empfangsterminals bzw. -anschlüsse, worin wenigstens eines der Terminals wenigstens einen Photodetektor (3) und wenigstens zwei Lichtquellen (1, 2) umfaßt, die optisch mit einer gemeinsamen optischen Übertragungs-/Empfangsantenne gekoppelt sind, **dadurch gekennzeichnet, daß**:
die optische Antenne des ersten Terminals als ein Fokussiermittel implementiert ist, das adaptiert ist, um Punktverteilungsfunktionen bzw. Punktspreizungsfunktionen bzw. Impulsantworten bzw. Point-Spread-Funktionen von Punkten, die an Ausgabeaperturen von Lichtquellen des ersten Terminals angeordnet sind, so zu bilden, um eine Überlappung derselben in einem Bereich zur Verfügung zu stellen, wo eine Übertragungs-/Empfangsantennenapertur des zweiten Terminals angeordnet ist (9); und
Punktverteilungsfunktionen, die durch die optische Antenne des ersten Terminals gebildet sind, die Punkten entsprechen, die in einer Antennenapertur des zweiten Terminals angeordnet sind, mit den Empfangsaperturen bzw. Öffnungen des ersten Terminals von Photodetektoren überlappen.

2. System nach Anspruch 1, weiterhin **dadurch gekennzeichnet, daß** die optische Antenne des ersten Terminals als eine Fokussierlinse (5) implementiert ist, während die Aperturen der Quellen und Photodetektoren des ersten Terminals entlang der optischen Achsen von Quellen und dementsprechend Photodetektoren von dem Bereich, der optisch mit der Antennenapertur des zweiten Terminals relativ zu der Antennenlinse des ersten Terminals um Abstände konjugiert ist, verlagert sind, was ein Überlappen von überstrahlten Bildern der Lichtquellen und Photodetektoren in der Ebene der Antennenapertur des zweiten Terminals bereitstellt.

3. System nach Anspruch 1, weiterhin **dadurch gekennzeichnet, daß** die optische Antenne des ersten Terminals eine Fokussierlinse (5) und eine transparente Platte (11) mit nicht-gleichmäßiger, optischer Dicke umfaßt, die zwischen der Linse und dem Bereich angeordnet ist, wo die Aperturen von Lichtquellen und Photodetektoren angeordnet sind.

4. System nach Anspruch 3, weiterhin **dadurch gekennzeichnet, daß** die transparente Platte mit nicht-gleichmäßiger, optischer Dicke in dem Bereich angeordnet ist, der optisch mit der Antennenapertur des zweiten Terminals relativ zu der Antennenlinse des ersten Terminals konjugiert ist.

5. System nach Anspruch 4, weiterhin **dadurch gekennzeichnet, daß** die Aperturen der Lichtquellen des ersten Terminals in Abständen Lₙ von der transparenten Platte angeordnet sind, gemessen entlang der Ausbreitungsrichtung von Licht und bestimmt aus den Beziehungen NAₙ.Lₙ = Dₙ>d, wobei NAₘ die numerische Apertur der n-ten Quelle ist; und Dₙ der Durchmesser des Ausgabelichtstrahls von der n-ten Quelle ist, gemessen an der transparenten Platte; d der maximale Abstand zwischen den Aperturen von Quellen ist, gemessen in der Richtung normal auf die Ausbreitungsrichtung von Licht.

6. System nach Anspruch 4, weiterhin **dadurch gekennzeichnet, daß** die Aperturen der Photodetektoren des ersten Terminals in einem Abstand H von der transparenten Platte angeordnet sind, gemessen entlang der Ausbreitungsrichtung von Licht und bestimmt durch die Beziehung (2NA_{T}+G).H = D>g, wobei: NA_{T} die numerische Apertur der Antennenlinse des ersten Terminals ist; G die Winkelbreite des Streuungsmusters von ebenen Licht ist; D der Durchmesser des Lichtstrahls ist, der durch die Antennenlinse und die Platte durchtritt, gemessen in dem Bereich, wo die Aperturen von Photodetektoren und Lichtquellen angeordnet sind; g die Querabmessung dieses Bereichs ist.

7. System nach Anspruch 4, weiterhin **dadurch gekennzeichnet, daß** die Bedingung NAₙ+G/2 < NA_{T} für jedes n erfüllt ist.

8. System nach Anspruch 4, weiterhin **dadurch gekennzeichnet, daß** der G Wert für jedes n die Bedingung G+qₙ/F > 2 NA_{T}.Lₙ/F erfüllt, wobei F die Brennweite der Antennenlinse ist; qₙ die Querschnittsabmessung der Apertur der n-ten Lichtquelle ist.

9. System nach Anspruch 1, weiterhin **dadurch gekennzeichnet, daß** die Antenne des ersten Terminals eine Fokussierlinse und eine optische Faser umfaßt, die zwischen der Antennenlinse und den Aperturen der Lichtquelle angeordnet ist, wobei der lichtleitende Kern des Faserdurchmessers gleich oder größer der Querabmessung des Bereichs ist, durch welche die Achsen der Lichtstrahlen, die von den Gesichtsfeldern der Quellen und der Photodetektoren des ersten Terminals durchtreten, gemessen in der Ebene des optischen Faserendes, das optisch mit den Aperturen der Quellen und Photodetektoren gekoppelt ist, während die Winkelablenkungen der obigen Achsen von der Achse der optischen Faser an ihrem Ende, das mit den Aperturen der Quellen und Photodetektoren gekoppelt ist, nicht die numerische Apertur der optischen Faser übersteigt.

10. System nach Anspruch 9, weiterhin **dadurch gekennzeichnet, daß** die optische Faser mit einer Länge S implementiert ist, die der Bedingung S > Qn₁/NA genügt, wobei: Q der Durchmesser des optischen Faserkerns ist; n₁ der Brechungsindex des Fasermaterials ist; NA die numerische Apertur dieser optischen Faser ist.

11. System nach Anspruch 9, weiterhin **dadurch gekennzeichnet, daß** das optische Faserende, das optisch mit der Antennenlinse des ersten Terminals gekoppelt ist, in dem Bereich angeordnet ist, der optisch mit der Antennenapertur des zweiten Terminals relativ zu der Antennenlinse des ersten Terminals konjugiert ist.

12. System nach Anspruch 9, weiterhin **dadurch gekennzeichnet, daß** das optische Faserende, das optisch mit der Antennenlinse gekoppelt ist, mit einer Antireflexionsbeschichtung implementiert ist.

13. System nach Anspruch 9, weiterhin **dadurch gekennzeichnet, daß** das optische Faserende, das optisch mit der Antennenlinse gekoppelt ist, mit einer Verdickung implementiert ist.

14. System nach Anspruch 13, weiterhin **dadurch gekennzeichnet, daß** die Verdickung als eine transparente Platte implementiert ist, wobei eine ihrer ebenen Flächen bzw. Oberflächen, die an das optische Faserende über eine Immersionsschicht festgelegt ist, während der lichtakzeptierende Durchmesser T der transparenten Platte größer als 2NA.h/n₂ ist; hier ist NA die numerische Apertur eines optischen Faserstücks, h die Plattendicke und n₂ der Brechungsindex des Plattenmaterials.

15. System nach Anspruch 1, weiterhin **dadurch gekennzeichnet, daß** die Ausgabeapertur von wenigstens einer Lichtquelle als ein optisches Faserende implementiert ist, während das andere Ende der optischen Faser optisch mit der Quelle der optischen Strahlung, die die übertragene Information trägt, gekoppelt ist.

16. System nach Anspruch 1, weiterhin **dadurch gekennzeichnet, daß** die Empfangsapertur von wenigstens einem Photodetektor als ein optisches Faserende implementiert ist, während das andere Ende der optischen Faser optisch mit einer Vorrichtung gekoppelt ist, die die optische Trägerstrahlung in elektrische Signale umwandelt.

17. System nach Anspruch 1, weiterhin **dadurch gekennzeichnet, daß** die Aperturen von Lichtquellen und Photodetektoren als optische Faserenden implementiert sind, während die anderen Enden der optischen Fasern optisch entsprechend mit Quellen von optischer Strahlung, die die übertragene Information führen, und mit Vorrichtungen gekoppelt sind, die die informationstragende bzw. -führende, optische Strahlung in elektrische Signale umwandeln.

18. System nach Anspruch 9, weiterhin **dadurch gekennzeichnet, daß** ein lichtleitender Kern der optischen Faser einen Durchmesser gleich 3p aufweist und daß die Ausgabeapertur der Lichtquelle und die Empfangsapertur des Photodetektors an das optische Faserende festgelegt sind, das optisch mit diesen gekoppelt ist, während die Apertur der Lichtquelle als ein optisches Faserende implementiert ist, das eine Querschnittsabmessung von p aufweist, mit dem anderen Ende der Faser, das optisch mit der Quelle von Information tragender bzw. führender, optischer Strahlung gekoppelt ist, und die Apertur des Photodetektors, die als Enden von sechs optischen Fasern implementiert ist, die jeweils eine Querschnittsabmessung von p aufweisen, wobei ihre anderen Enden optisch mit einer Vorrichtung gekoppelt sind, die die Information tragende, optische Strahlung in elektrische Signale umwandelt.

19. System nach Anspruch 9, weiterhin **dadurch gekennzeichnet, daß** ein lichtleitender Kern der optischen Faser einen Durchmesser von 3p aufweist, wobei die Aperturen von zwei Lichtquellen und einem Photodetektor an das optische Faserende, das optisch mit diesen gekoppelt ist, festgelegt sind, während Aperturen von Lichtquellen als Enden von zwei optischen Fasern implementiert sind, die Querschnittsabmessungen von p aufweisen, mit den anderen Enden der optischen Fasern, die optisch mit den Information tragenden, optischen Strahlungsquellen gekoppelt sind, und die Apertur des Photodetektors, die als Enden von fünf optischen Fasern, die Querschnittsabmessungen von p aufweisen, implementiert ist, wobei ihre anderen Enden optisch mit einer Vorrichtung gekoppelt sind, die die Information tragende, optische Strahlung in elektrische Signale umwandelt.

20. System nach Anspruch 1, weiterhin **dadurch gekennzeichnet, daß** die Antennenlinse des ersten Terminals als Fokussierlinse der Brechungsart implementiert ist, umfassend eine oder mehrere optische Komponente(n), die gegenüber optischer Strahlung transparent ist (sind), die durch die Antenne übertragen und empfangen ist (sind).

21. System nach Anspruch 1, weiterhin **dadurch gekennzeichnet, daß** die Antennenlinse des ersten Terminals als eine Fokussierlinse der Reflexionsart implementiert ist, umfassend einen oder mehrere konkave(n) und/oder konvexe(n) Spiegel, der (die) optische Strahlung reflektieren(t), die durch die Antenne übertragen und empfangen ist.

22. System nach Anspruch 1, weiterhin **dadurch gekennzeichnet, daß** die Antennenlinse des ersten Terminals eine oder mehrere optische Komponente(n) der Brechungsart umfaßt, die gegenüber der Strahlung, die durch die Antenne übertragen und empfangen ist, transparent ist (sind) und einen oder mehrere konkave(n) und/oder konvexe(n) Spiegel, der (die) optische Strahlung, die durch die Antenne übertragen und empfangen ist, reflektieren(t).

23. System nach Anspruch 1, weiterhin **dadurch gekennzeichnet, daß** die optische Antenne des ersten Terminals mit Mittel implementiert ist, die ihre Transparenz nur in Spektrumteilen zur Verfügung stellen, die durch Frequenzspektren von optischer Strahlung, die durch sie übertragen und empfangen sind, eingenommen sind, während die Photodetektoren mit Mitteln zur Auswahl von Kanälen bereitgestellt sind, in denen optische Strahlung ausgefiltert wird, die Spektren unterschiedlich von jenen, die für einen speziellen Photodetektor gedacht sind, aufweisen.

24. System nach Anspruch 23, weiterhin **dadurch gekennzeichnet, daß** die Mittel, die Antennentransparenz nur in Spektrumteilen zur Verfügung stellen, die durch Frequenzspektren von optischer Strahlung, die durch sie übertragen und empfangen ist, als ein oder mehrere optische(r) Filter implementiert ist (sind), der (die) zwischen der Antenne und dem zweiten Anschluß, innerhalb der Antenne, zwischen der Antenne und den Aperturen von Lichtquellen und Photodetektoren installiert ist (sind).

25. System nach Anspruch 23, weiterhin **dadurch gekennzeichnet, daß** die Mittel, die die Antennentransparenz nur in Spektrumteilen zur Verfügung stellen, die durch Frequenzspektren von optischer Strahlung eingenommen sind, die durch sie übertragen und empfangen ist, als eine Reflexionsbeschichtung, die auf einer oder mehreren optischen Komponente(n) der Antenne abgeschieden bzw. aufgebracht ist, mit einer Reflexionsfähigkeit nur in Spektrumteilen, die durch Frequenzspektren optischer Strahlung eingenommen sind, die durch die Antenne übertragen und empfangen sind, implementiert ist.

26. Optische Freiraumkommunikationsanschluß- bzw. -terminal und Antennenkombination, wobei das Terminal der Kombination eine Mehrzahl von Lichtquellen (1, 2) und eine Mehrzahl von Photodetektoren (3) umfaßt, wobei die Antenne eine übertragende/empfangende, optische Antenne ist, die den Lichtquellen und Photodetektoren des Terminals zum Übertragen und Empfangen von optischen Kommunikationen zu und von einem entfernten Anschluß gemeinsam ist, wobei der optische Freiraumkommunikationsanschluß **dadurch gekennzeichnet ist, daß**:
die optische Antenne als ein Fokussiermittel implementiert ist, um Punktverteilungsfunktionen bzw. Punktspreizungsfunktionen bzw. Impulsantworten bzw. Point-Spread Funktionen von Punkten, die an Aperturen der Lichtquellen angeordnet sind, so zu bilden, daß Bilder der Aperturen und der Lichtquellen einander in einem entfernten Bereich überlappen, welcher in der Verwendung einer Übertragungs-/Empfangsapertur des entfernten Terminals entspricht; und wobei Punktverteilungsfunktionen, die durch die optische Antenne ausgebildet sind, in der Verwendung Punkten entsprechen, die in einer Übertragungs-/Empfangsapertur des entfernten Terminals angeordnet sind, um mit Empfangsaperturen der Photodetektoren zu überlappen.

## Revendications

1. Système de communication optique en espace libre comprenant deux terminaux d'émission/réception, dans lequel au moins un des terminaux comprend au moins un photodétecteur (3) et au moins deux sources de lumière (1, 2) couplés optiquement à une antenne optique d'émission/réception commune, **caractérisé en ce que** :
l'antenne optique du premier terminal est mise en oeuvre sous la forme d'un moyen de focalisation adapté pour former des fonctions d'étalement du point de points situés à des ouvertures de sortie des sources de lumière du premier terminal de manière à assurer un chevauchement de celles-ci dans une zone où est située l'ouverture d'antenne d'émission/réception du second terminal (9) ; et
des fonctions d'étalement du point formées par l'antenne optique du premier terminal correspondant à des points situés à l'intérieur de l'ouverture d'antenne du second terminal qui chevauchent les ouvertures de réception des photodétecteurs du premier terminal.

2. Système selon la revendication 1, **caractérisé en outre en ce que** l'antenne optique du premier terminal est mise en oeuvre sous la forme d'une lentille de focalisation (5) tandis que les ouvertures des sources et des photodétecteurs du premier terminal sont déplacées le long des axes optiques des sources et, de manière correspondante, des photodétecteurs, de la zone conjuguée optiquement avec l'ouverture d'antenne du second terminal par rapport à la lentille d'antenne du premier terminal sur des distances assurant un chevauchement d'images traitées des sources de lumière et des photodétecteurs dans le plan d'ouverture d'antenne du second terminal.

3. Système selon la revendication 1, **caractérisé en outre en ce que** l'antenne optique du premier terminal comprend une lentille de focalisation (5) et une plaque transparente (11) d'une épaisseur optique non uniforme placée entre la lentille et la zone où sont disposées les ouvertures des sources de lumière et des photodétecteurs.

4. Système selon la revendication 3, **caractérisé en outre en ce que** la plaque transparente d'une épaisseur optique non uniforme est placée dans la zone conjuguée optiquement avec l'ouverture d'antenne du second terminal par rapport à la lentille d'antenne du premier terminal.

5. Système selon la revendication 4, **caractérisé en outre en ce que** les ouvertures des sources de lumière du premier terminal sont disposées à des distances Lₙ de la plaque transparente, telles que mesurées le long de la direction de propagation de la lumière et déterminées à partir de relations NAₙ.Lₙ = Dₙ>d,
où NAₙ est l'ouverture numérique de la n^{ième} source ; et Dₙ est le diamètre du faisceau lumineux en sortie de la n^{ième} source, tel que mesuré au niveau de la plaque transparente ; d est la distance maximale entre les ouvertures des sources, telle que mesurée dans la direction normale à la direction de propagation de la lumière.

6. Système selon la revendication 4, **caractérisé en outre en ce que** les ouvertures des photodétecteurs du premier terminal sont disposées à une distance H de la plaque transparente, telle que mesurée le long de la direction de propagation de la lumière et déterminée à partir de la relation (2NA_{T}+G).H = D>g, où : NA_{T} est l'ouverture numérique de la lentille d'antenne du premier terminal ; G est la dimension angulaire du motif de diffusion de la lumière de la plaque ; D est le diamètre du faisceau lumineux traversant la lentille d'antenne et la plaque, tel que mesuré dans la zone où sont situées les ouvertures des photodétecteurs et des sources de lumière ; g est la dimension transversale de cette zone.

7. Système selon la revendication 4, **caractérisé en outre en ce que** la condition NAₙ+G/2 <NA_{T} est satisfaite pour tout n.

8. Système selon la revendication 4, **caractérisé en outre en ce que** la valeur de G pour tout n satisfait la condition G+qₙ/F > 2 NA_{T}.Lₙ/F, où F est la longueur focale de la lentille d'antenne ; qₙ est la dimension en section transversale de l'ouverture de la n^{ième} source de lumière.

9. Système selon la revendication 1, **caractérisé en outre en ce que** l'antenne du premier terminal comprend une lentille de focalisation et une fibre optique placées entre la lentille d'antenne et les ouvertures des sources de lumière et des photodétecteurs, le coeur conducteur de lumière de la fibre ayant un diamètre supérieur ou égal à la dimension transversale de la zone à travers laquelle passent les axes des faisceaux lumineux émis par les sources et des champs de vision des photodétecteurs du premier terminal, telle que mesurée dans le plan de l'extrémité de la fibre optique couplée optiquement aux ouvertures des sources et des photodétecteurs, tandis que les écarts angulaires des axes ci-dessus par rapport à l'axe de la fibre optique à son extrémité couplée optiquement aux ouvertures des sources et des photodétecteurs ne dépassent pas l'ouverture numérique de la fibre optique.

10. Système selon la revendication 9, **caractérisé en outre en ce que** la fibre optique est mise en oeuvre avec une longueur S satisfaisant la condition S > Qn₁/NA, où : Q est le diamètre du coeur de la fibre optique ; n₁ est l'indice de réfraction du matériau de la fibre ; NA est l'ouverture numérique de cette fibre optique.

11. Système selon la revendication 9, **caractérisé en outre en ce que** l'extrémité de la fibre optique couplée optiquement à la lentille d'antenne du premier terminal est disposée dans la zone conjuguée optiquement à l'ouverture d'antenne du second terminal par rapport à la lentille d'antenne du premier terminal.

12. Système selon la revendication 9, **caractérisé en outre en ce que** l'extrémité de la fibre optique couplée optiquement à la lentille d'antenne est mise en oeuvre avec un revêtement antireflet.

13. Système selon la revendication 9, **caractérisé en outre en ce que** l'extrémité de la fibre optique couplée optiquement à la lentille d'antenne est mise en oeuvre avec un épaississement.

14. Système selon la revendication 13, **caractérisé en outre en ce que** l'épaississement est mis en oeuvre sous la forme d'une plaque transparente avec une de ses surfaces plates fixées à l'extrémité de la fibre optique via une couche d'immersion, tandis que le diamètre T receveur de lumière de la plaque transparente est supérieur à 2NA.h/n₂ ; ici, NA est l'ouverture numérique de la pièce de fibre optique, h est l'épaisseur de la plaque, et n₂ est l'indice de réfraction du matériau de la plaque.

15. Système selon la revendication 1, **caractérisé en outre en ce que** l'ouverture de sortie d'au moins une source de lumière est mise en oeuvre sous la forme d'une extrémité de fibre optique, tandis que l'autre extrémité de la fibre optique est couplée optiquement à la source de rayonnement optique transportant les informations transmises.

16. Système selon la revendication 1, **caractérisé en outre en ce que** l'ouverture de réception d'au moins un photodétecteur est mise en oeuvre sous la forme d'une extrémité de fibre optique, tandis que l'autre extrémité de la fibre optique est couplée optiquement à un dispositif convertissant le rayonnement optique en signaux électriques.

17. Système selon la revendication 1, **caractérisé en outre en ce que** les ouvertures des sources de lumière et des photodétecteurs sont mises en oeuvre sous la forme d'extrémités de fibres optiques, tandis que les autres extrémités des fibres optiques sont couplées optiquement, de manière correspondante, à des sources de rayonnement optique transportant les informations transmises et à des dispositifs convertissant en signaux électriques le rayonnement optique transportant les informations.

18. Système selon la revendication 9, **caractérisé en outre en ce qu'**un coeur conducteur de lumière de la fibre optique a un diamètre égal à 3p, et **en ce que** l'ouverture de sortie de la source de lumière et l'ouverture de réception du photodétecteur sont fixées à l'extrémité de la fibre optique couplée optiquement avec elles, tandis que l'ouverture de la source de lumière est mise en oeuvre sous la forme d'une extrémité de fibre optique ayant une dimension en section transversale de p, l'autre extrémité de la fibre étant couplée optiquement à la source de rayonnement optique transportant les informations, et l'ouverture du photodétecteur étant mise en oeuvre sous la forme d'extrémités de six fibres optiques, chacune d'elles ayant une dimension en section transversale de p, leurs autres extrémités étant couplées optiquement à un dispositif convertissant en signaux électriques le rayonnement optique transportant les informations.

19. Système selon la revendication 9, **caractérisé en outre en ce qu'**un coeur conducteur de lumière de la fibre optique a un diamètre égal à 3p, les ouvertures de deux sources de lumière et d'un photodétecteur étant fixées à l'extrémité de la fibre optique couplée optiquement avec elles, tandis que les ouvertures des sources de lumière sont mises en oeuvre sous la forme d'extrémités de deux fibres optiques ayant des dimensions en section transversale de p, les autres extrémités de fibres étant couplées optiquement aux sources de rayonnement optique transportant les informations, et l'ouverture du photodétecteur étant mise en oeuvre sous la forme d'extrémités de cinq fibres optiques ayant des dimensions en section transversale de p, leurs autres extrémités étant couplées optiquement à un dispositif convertissant en signaux électriques le rayonnement optique transportant les informations.

20. Système selon la revendication 1, **caractérisé en outre en ce que** la lentille d'antenne du premier terminal est mise en oeuvre sous la forme d'une lentille de focalisation de type à réfraction, comprenant un ou plusieurs composants optiques transparents au rayonnement optique émis et reçu par l'intermédiaire de l'antenne.

21. Système selon la revendication 1, **caractérisé en outre en ce que** la lentille d'antenne du premier terminal est mise en oeuvre sous la forme d'une lentille de focalisation de type à réflexion, comprenant un ou plusieurs miroirs concaves et/ou convexes réfléchissant le rayonnement optique émis et reçu par l'intermédiaire de l'antenne.

22. Système selon la revendication 1, **caractérisé en outre en ce que** la lentille d'antenne du premier terminal comprend un ou plusieurs composants optiques de type à réfraction transparents au rayonnement émis et reçu par l'intermédiaire de l'antenne, et un ou plusieurs miroirs concaves et/ou convexes réfléchissant le rayonnement optique émis et reçu par l'intermédiaire de l'antenne.

23. Système selon la revendication 1, **caractérisé en outre en ce que** l'antenne optique du premier terminal est mise en oeuvre avec un moyen assurant sa transparence uniquement dans les parties du spectre occupées par les spectres de fréquence du rayonnement optique émis et reçu par son intermédiaire, tandis que les photodétecteurs sont munis d'un moyen pour la sélection de canaux en éliminant par filtrage le rayonnement optique ayant des spectres optiques différents de ceux prévus pour un photodétecteur en particulier.

24. Système selon la revendication 23, **caractérisé en outre en ce que** le moyen assurant la transparence de l'antenne uniquement dans les parties du spectre occupées par les spectres de fréquence du rayonnement optique émis et reçu par son intermédiaire, est mis en oeuvre sous la forme d'un ou de plusieurs filtres optiques installés entre l'antenne et le second terminal, à l'intérieur de l'antenne, entre l'antenne et les ouvertures des sources de lumière et des photodétecteurs.

25. Système selon la revendication 23, **caractérisé en outre en ce que** le moyen assurant la transparence de l'antenne uniquement dans les parties du spectre occupées par les spectres de fréquence du rayonnement optique émis et reçu par son intermédiaire, est mis en oeuvre sous la forme d'un revêtement de réflexion déposé sur un ou plusieurs composants optiques de l'antenne avec une réflectivité uniquement dans les parties du spectre occupées par les spectres de fréquence du rayonnement optique émis et reçu par l'intermédiaire de l'antenne.

26. Combinaison d'un terminal et d'une antenne de communication optique en espace libre, le terminal de la combinaison comprenant une pluralité de sources de lumière (1, 2) et une pluralité de photodétecteurs (3), dans laquelle l'antenne est une antenne optique d'émission/réception commune aux sources de lumière et aux photodétecteurs du terminal pour émettre et recevoir des communications optiques en direction de et depuis un terminal distant, dans laquelle le terminal de communication optique en espace libre est **caractérisé en ce que** :
l'antenne optique est mise en oeuvre sous la forme d'un moyen de focalisation adapté pour former des fonctions d'étalement du point de points situés à des ouvertures des sources de lumière de sorte que des images des ouvertures des sources de lumière se chevauchent dans une zone à distance qui, lors de l'utilisation, correspond à une ouverture d'émission/réception dudit terminal distant ; et dans laquelle
les fonctions d'étalement du point formées par l'antenne optique correspondant, lors de l'utilisation, à des points situés à l'intérieur d'une ouverture d'émission/réception du terminal distant, qui chevauchent les ouvertures de réception des photodétecteurs.
